# FASCICULE DE BREVET EUROPEEN

(11) **EP 3 668 655 B1**
(45) Date de publication et mention de la délivrance du brevet: **12.07.2023**
(21) Numéro de dépôt: 18753125.6
(22) Date de dépôt: 03.08.2018
(51) Int. Cl.: B05B 1/30, B05C 5/02

(54) **ALIMENTATION PNEUMATIQUE PAR UN CAPOT DE VANNE**
PNEUMATISCHE VERSORGUNG ÜBER EINEN VENTILDECKEL
PNEUMATIC SUPPLY VIA A VALVE COVER

(30) Priorité: 15.08.2017 FR 1757683
(43) Date de publication de la demande: 24.06.2020
(73) Titulaire: Pomtava SA, 2732 Reconvilier (CH)
(72) Inventeur: MARCHAND, Euphémien, 2732 Reconvilier (CH); NICOLET, Aloïs, 2732 Reconvilier (CH)
(74) Mandataire: Vigand, Philippe
(86) Numéro de dépôt international: PCT/EP2018/071094
(87) Numéro de publication internationale: WO 2019/034449

(56) Documents cités:
- EP-A2- 2 628 390
- WO-A1-2013/071398
- FR-A- 1 285 687
- US-A- 3 410 518

## Description

La présente invention concerne de manière générale un dispositif de projection d'un produit de revêtement sous forme liquide, et un procédé de fabrication d'un tel dispositif.

Il est connu dans l'art antérieur des dispositifs de projection de revêtement liquide.

Le document FR2674773 divulgue un pistolet à air comprimé. En contrepartie, ce système présente notamment l'inconvénient d'être encombrant, et d'être doté de trous d'usinage et d'un bloc foré, augmentant la dimension hors tout du dispositif portable ainsi que le risque de fuite, entraînant un risque de contrôle défectueux. De plus, le document WO 2013/071398 divulgue un applicateur pour pulvériser un matériau élastomère. US 3 410 518 divulgue une vanne qui est actionnée par des moyens hydrauliques.

Un but de la présente invention est de répondre aux inconvénients des documents de l'art antérieur mentionnés ci-dessus et en particulier, tout d'abord, de proposer un dispositif de projection de produit de revêtement sous forme liquide compact et efficace, dont le risque de fuite est diminué, la prise en main améliorée et le contrôle sécurisé.

Pour cela, l'invention concerne un dispositif de projection d'un produit de revêtement sous forme liquide selon la revendication 1 et comprenant:
- des moyens de projection du produit liquide,
- une vanne de contrôle d'écoulement du produit liquide vers les moyens de projection,
la vanne étant actionnée par un fluide de contrôle et comprenant:
- un piston agencé pour être déplacé par le fluide de contrôle entre un point mort haut et un point mort bas,
- un pointeau solidaire du piston et agencé pour libérer ou obturer un passage de produit liquide vers les moyens de projection,
- un corps de vanne comprenant un logement agencé pour loger le piston, et comprenant un connecteur d'alimentation en fluide de contrôle agencé du côté du point mort bas,
le dispositif étant caractérisé en ce que le corps de vanne est monolithique et comprend en outre au moins un canal d'alimentation en fluide de contrôle formé dans une paroi latérale du corps de vanne et dont au moins une portion longitudinale s'étend le long d'une partie du logement depuis le côté du connecteur d'alimentation vers le côté du point mort haut.

Ceci permet de proposer un dispositif de projection de produit de revêtement liquide particulièrement compact, et dont le corps monolithique ne présente pas de trous ou d'ouvertures bouchonnés destinés uniquement à la réalisation du canal d'alimentation, éliminant les risques de fuite au niveau des bouchons ou obturations. En d'autres termes, le corps monolithique est exempt de trous d'usinage ultérieurement bouchés.

Ceci permet également d'améliorer la portabilité du dispositif et son maniement aisé par un opérateur. De plus, ceci permet de sécuriser le contrôle d'écoulement du produit liquide de revêtement, notamment grâce à une réduction du risque de fuite et une amélioration de l'efficacité et de la réactivité de la vanne.

On entend par point mort haut une première positon extrême du piston dans lequel il est en fin de course, en position sortie ; et par point mort bas une deuxième position extrême du piston dans lequel il est en début de cours, en position rentrée. En d'autres termes, le piston est agencé pour suivre une course ou un parcours à l'intérieur le long du logement entre le début de course, dans lequel il est au fond du logement et la fin de course, dans lequel il est presque sorti du logement, ou en tout cas il est éloigné du fond du logement.

Selon l'invention, ledit au moins un canal d'alimentation comprend en outre :
- une portion côté point mort bas en deçà du point mort bas s'étendant le long d'une direction ayant une composante radiale et reliant le connecteur d'alimentation à la portion longitudinale, et
- une portion côté point mort haut s'étendant le long d'une direction ayant une composante radiale connectée à la portion longitudinale et comprenant un trou d'échappement débouchant dans le logement du corps de vanne au-delà du point mort haut, de sorte à permettre le rappel du piston.

Ceci permet de proposer un dispositif compact avec un fonctionnement efficace du piston, de sorte à actionner aisément le piston et le pointeau et ainsi libérer ou obturer le passage de produit liquide vers les moyens de projection, tel qu'un projecteur ou une buse.

Avantageusement, ledit au moins un canal d'alimentation est un conduit continu directement intégré au corps de vanne monolithique. En d'autres termes, le conduit présente une extrémité qui débouche dans le logement, et une autre qui débouche vers le connecteur en fluide de contrôle, et il chemine dans le corps sans jonction avec un canal secondaire usiné pour former un chemin tortueux.

Ceci permet de proposer un dispositif de projection dont l'étanchéité est améliorée, la conception simplifiée et le fonctionnement optimisé.

Avantageusement, ledit au moins un canal d'alimentation présente un diamètre inférieur ou égal à 1,5 mm.

Ceci permet de proposer un dispositif avec de petites dimensions de sorte à avoir un dispositif très peu encombrant et fortement maniable, avec une excellente prise en main en cas d'utilisation manuelle par un opérateur. Alternativement, si le dispositif est embarqué sur un robot de peinture, il est de faibles dimensions et donc léger.

Avantageusement, le corps de vanne présente un diamètre extérieur inférieur ou égal à 30 mm.

Avantageusement, le corps de vanne présente un diamètre extérieur inférieur ou égal à 15 mm.

Ceci permet de proposer un dispositif avec un encombrement réduit et une grande maniabilité pour un utilisateur dans le cadre d'une utilisation portable ou nomade du dispositif notamment. Alternativement, si le dispositif est embarqué sur un robot de peinture, il est de faibles dimensions et donc léger.

Avantageusement, la vanne comprend en outre un ressort de rappel agencé pour être logée dans le logement entre le côté du connecteur d'alimentation et le piston. Il s'agit donc d'une vanne simple effet.

Ceci permet de proposer un dispositif avec un fonctionnement simple et intuitif, de sorte à réaliser une opération de peinture en un geste de l'opérateur par exemple.

Avantageusement, le pointeau est agencé pour :
- ouvrir le passage de produit liquide vers les moyens de projection lorsque le fluide de contrôle est distribué au point mort haut,
- fermer un passage de produit liquide vers les moyens de projection lorsque le fluide de contrôle n'est pas distribué au point mort haut.

Ceci permet de proposer un dispositif dans lequel un actionnement du dispositif par l'utilisateur autorise la projection de liquide de revêtement, actionnement qui peut être fait par une pression de l'utilisateur sur une gâchette ou un bouton d'actionnement du dispositif par exemple; lorsque l'utilisateur relâche la gâchette la projection de liquide de revêtement est stoppée ou arrêtée. L'action peut également être réalisée par un robot.

Selon l'invention, le corps de vanne comprend une pluralité de canaux d'alimentation en fluide de contrôle logés dans la paroi du corps de vanne. La pluralité de canaux augmente le débit en fluide de contrôle.

Ceci permet de proposer un dispositif avec un fonctionnement sans à-coups, avec une excellente répartition des efforts dû au fluide de contrôle et une grande réactivité.

Avantageusement, chacun de la pluralité de canaux d'alimentation présente un axe parallèle à un axe du piston, ou à un axe du ressort ou à un axe du connecteur d'alimentation.

Ceci permet de proposer un dispositif présentant une conception compacte et un fonctionnement réactif.

Avantageusement, chacun de la pluralité de canaux d'alimentation présente :
- une portion amont qui relie une partie centrale de connexion à une portion longitudinale éloignée d'un axe du piston et qui longe le logement, et
- une portion aval qui relie la portion longitudinale au logement.

Autrement dit, chaque portion amont est orientée au moins partiellement selon une direction radiale, et de même pour chaque portion aval.

Un aspect non revendiqué de la présente invention concerne un procédé de fabrication du dispositif.

Avantageusement, le procédé comprend au moins l'étape consistant à :
- fabriquer le corps de vanne par un procédé de fabrication additive, tel qu'une impression métallique laser.

Ceci permet de proposer un procédé de fabrication parfaitement adapté à la réalisation du corps de vanne monolithique, c'est-à-dire en une seul pièce ou un seul morceau, et sans trous débouchant en dehors ou sur une surface externe du corps de vanne, évitant tout risque de fuite de fluide de contrôle. Cela permet de former au moins un conduit d'alimentation avec un chemin tortueux et/ou contre dépouille qui ne débouche que vers le connecteur et le logement. Il n'y a pas besoin de faire d'opération de perçages multiples croisés et boucher ensuite les trous d'accès pour former le canal d'alimentation.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un dispositif de projection d'un produit de revêtement sous forme liquide selon un premier mode de réalisation de la présente invention, dans une position activée,
- la figure 2 représente le dispositif de projection du produit de revêtement sous forme liquide selon le premier mode de réalisation de la présente invention, dans une position désactivée,
- la figure 3 représente le dispositif de projection de produit de revêtement sous forme liquide selon un deuxième mode de réalisation de la présente invention, dans une position activée,
- la figure 4 représente le dispositif de projection de produit de revêtement sous forme liquide selon le deuxième mode de réalisation de la présente invention, dans une position désactivée,
- la figure 5 représente une coupe au niveau d'un pointeau du dispositif de projection selon le deuxième mode de réalisation,
- la figure 6 représente un schéma de fonctionnement selon un troisième mode de réalisation de la présente invention.

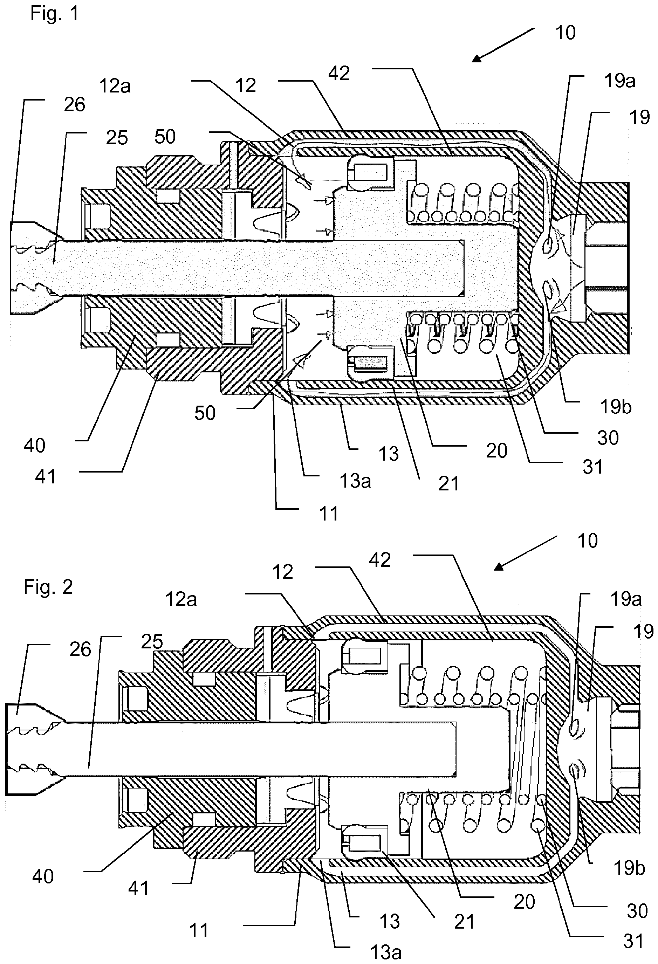

La figure 1 représente un dispositif de projection d'un produit de revêtement sous forme liquide selon un premier mode de réalisation de la présente invention, dans une position activée.

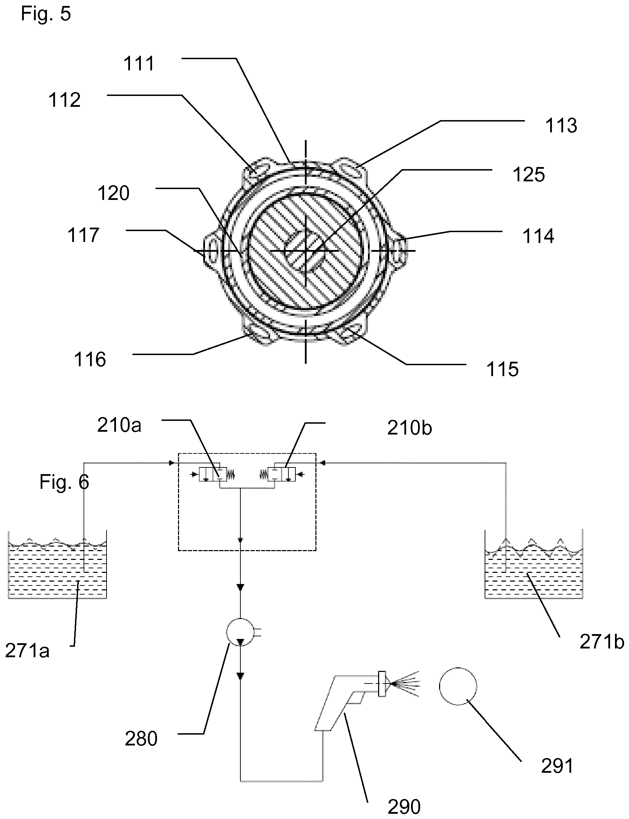

Le dispositif de projection du produit de revêtement sous forme liquide comprend des moyens de projection du produit liquide, également appelé projecteur 290 (représenté en figure 6), et une vanne 10 de contrôle d'écoulement du produit liquide vers les moyens de projection.

La vanne 10 est actionnée par un fluide de contrôle 50, dont l'écoulement et l'action sur un piston 20 de la vanne sont schématiquement représentés par des flèches. Le piston 20 est agencé pour être déplacé par le fluide de contrôle 50 entre un point mort haut du piston 20, du coté du pointeau 25 et un point mort bas du piston 20, du côté opposé.

La vanne 10 comprend en outre un pointeau 25 doté d'une base de pointeau 26 et solidaire du piston 20. Le pointeau 25 est agencé pour respectivement libérer ou obturer un passage de produit liquide vers les moyens de projection, par le bais respectivement d'un dégagement ou d'un recouvrement de la base de pointeau 26 sur le passage de produit liquide.

La vanne 10 comprend en outre un corps de vanne 11 comprenant un logement 42 agencé pour loger le piston 20 et comprenant un connecteur d'alimentation 19 en fluide de contrôle agencé du côté du point mort bas du piston 20. Le piston 20 peut donc parcourir une course entre une première position extrême, en début de course, à partir du point mort bas, du côté connecteur 19, et une deuxième position extrême, en fin de course, jusqu'au point mort haut, du côté du pointeau 25, opposé au connecteur 19.

Le corps de vanne 11 est monolithique et comprend en outre une pluralité de canaux d'alimentation 12, 13 en fluide de contrôle logé dans une paroi latérale du corps de vanne 11 et dont au moins une portion longitudinale s'étend le long d'une partie du logement 42 depuis le côté du connecteur d'alimentation 19 vers le côté du point mort haut. La pluralité de canaux d'alimentation est composée de six canaux d'alimentation 12, 13 dont deux sont représentés dans la coupe de la figure 1. Le nombre de canaux d'alimentation n'étant pas à être considéré comme limitatif. Il est choisi dans le présent exemple afin de permettre un bon équilibrage dynamique du piston 20. Le connecteur 19 est composé d'une pluralité de trous 19a, 19b en nombre égal au nombre de la pluralité de canaux d'alimentation 12, 13 à laquelle elle est connectée.

En d'autres termes, les canaux d'alimentation 12, 13 présentent chacun un axe parallèle à l'axe de déplacement du piston 20 et à l'axe du pointeau 25. Le connecteur 19 est placé dans l'alignement du piston 20 et du pointeau 25, du côté du point mort bas du piston 20. Les canaux d'alimentation 12, 13 partent ainsi du connecteur 19, de façon encore plus précise depuis des trous 19a, 19b du connecteur 19, d'un côté de la vanne 10 et aboutissent à un côté opposé au connecteur 19, du côté du point mort haut du piston 20, aux trous débouchant 12a, 13a des canaux d'alimentation 12, 13.

Ainsi, les canaux d'alimentation 12, 13 comprennent une portion initiale, une portion centrale, également appelée simplement portion ou portion principale ou encore portion longitudinale, et une portion finale, dans un sens d'écoulement afin d'actionner le piston 20. La portion initiale du canal d'alimentation 12, 13, également appelée portion amont, portion du côté du connecteur 19 ou portion côté du point mort bas s'étend depuis le connecteur 19 jusqu'à la portion centrale, aux environs du rayon de raccordement en fond de logement 42, sans déboucher dans le logement 42. La portion côté point mort bas est située en deçà du point mort bas et le long d'une direction ayant une composante radiale.

La portion centrale du canal d'alimentation 12, 13 s'étend le long d'une partie du logement 42 depuis la portion point mort bas jusqu'à la portion finale, également appelée portion point mort haut. En d'autres termes, la portion centrale est longitudinalement formée ou logée dans une paroi latérale du corps de vanne 11 de la vanne 11 et ne débouche que sur la portion point mort bas et sur la portion point mort haut. La portion centrale est connectée à la portion point mort haut et à la portion point mors bas.

La portion point mort haut du canal d'alimentation 12, 13, également appelée portion aval, s'étend le long d'une direction ayant une composante radiale et débouche dans le logement 42, dans un trou débouchant ou trou d'échappement 12a, 13a, situé au-delà du point mort haut du piston 20. De cette façon, en injectant du fluide de contrôle 50, tel qu'un fluide pneumatique, air comprimé, ou air instrument, ou tel qu'un liquide, par exemple de l'huile hydraulique, sous pression, le piston 20 se déplace dans le logement 42 depuis le point mort haut vers le point mort bas, de sorte à permettre le rappel du piston 20.

Le piston 20 étant solidaire du pointeau 25 et de la base de pointeau 26, le pointeau 25 et la base de pointeau 26 sont également mobiles et la base de pointeau 26 peut libérer ou obturer un passage de produit liquide vers les moyens de projection.

La portion centrale s'étend au moins au-delà de la moitié du logement 42 ou alésage, dans un exemple avantageux.

En d'autres termes, le canal d'alimentation 12, 13 est un conduit fermé directement intégré au corps de vanne 11 monolithique.

Dans un exemple avantageux, un procédé de fabrication du dispositif de projection du produit de revêtement sous forme liquide comprend au moins une étape consistant à fabriquer le corps de vanne 11 par un procédé de fabrication additive, tel qu'une impression métallique laser ou un impression en trois-dimensions dans un matériau plastique.

Ainsi, le canal d'alimentation 12, 13 ne présente pas de trous de connexion afin de réaliser l'usinage ou la fonderie, qu'il faut ensuite reboucher ou bouchonner, avec un risque de fuite dès lors qu'il y a une interface mécanique. Dans la présente invention, il n'y a ni trous de réalisation ni bouchons qu'un procédé d'usinage rend obligatoire, c'est-à-dire que le canal d'alimentation 12, 13 ne présente qu'un trou débouchant 12a, 13a débouchant dans le logement 42 du corps de vanne 11, mais pas d'autres trous nécessaires à la fabrication ou au passage d'un outil. Le corps de vanne 11 peut donc être réalisé en un seul morceau ou une seule pièce, de façon monolithique, évitant ainsi le risque de fuite.

Le corps de vanne 11 présente un diamètre extérieur inférieur ou égal à 30 mm dans un exemple avantageux, et inférieur ou égal à 15 mm dans un exemple très avantageux.

Le canal d'alimentation présente un diamètre inférieur ou égal à 1.5 mm.

La vanne 10 comprend en outre un couvercle de piston 41 et un contre-couvercle de piston 40, de sorte à empêcher le piston 20 de sortir du logement 42 lorsque le fluide de contrôle 50 est alimenté aux canaux d'alimentation 12, 13 depuis le connecteur 19.

Le piston 20 comprend un joint, tel qu'un joint à double-lèvres 21 afin d'assurer l'étanchéité. Le piston 20 est repoussé vers le côté du pointeau 25 par deux ressorts 30, 31 logés dans le logement 42 du corps de vanne 11, entre le piston 20 et le fond du logement 42 du côté du connecteur 19.

La figure 2 représente le dispositif de projection du produit de revêtement sous forme liquide selon le premier mode de réalisation de la présente invention, dans une position désactivé.

La vanne 10 de la figure 1 reprend le même mode de réalisation que celui illustré en figure 1. La vanne 10 comprend le corps de vanne 11, le piston 20 doté de son joint à lèvres 21, solidaire du pointeau 25 doté de la base de pointeau 26. Le piston 20 est repoussé vers le point mort haut par les ressorts 30, 31 logés dans le logement 42 du corps de vanne 11. Le pointeau 25 étant solidaire du piston 20, il va libérer ou obturer le passage de produit liquide vers les moyens de projection, de façon contraire à la figure 1. Dans un exemple avantageux, l'actionnement du piston 20 par le fluide de contrôle 50 en direction du point mort bas représenté en figure 1 fait mouvoir le pointeau 25 et sa base de pointeau 26 de façon à libérer le passage de produit liquide vers les moyens de projection ; alors que dans la figure 2, les ressorts 30, 31 repoussent le piston 20 en direction du point mort haut en faisant bouger le pointeau 25 et sa base de pointeau 26 de sorte à obturer le passage de produit liquide vers les moyens de projection.

Le corps de vanne 11 comprend les canaux d'alimentation 12, 13 comprenant une portion point mort bas reliant le connecteur 19 doté de trous 19a, 19b, à la portion centrale des canaux d'alimentation 12, 13, logée dans la paroi latérale du corps de vanne 11 et s'étendant longitudinalement et parallèlement au logement 42 jusqu'à la portion point mort haut, débouchant dans le logement 42 par l'intermédiaire de trous débouchant ou d'échappement 12a, 13a. Le logement 42 est cylindrique dans un exemple avantageux, de même que le piston 20. L'ensemble du canal d'alimentation 12, 13 et ses différentes portions est logé dans le corps de vanne 11.

En d'autres termes, dans les figures 1 et 2, l'alimentation en fluide de contrôle 50 est réalisée dans la paroi latérale du corps de vanne 11, la paroi formant un capot de vanne 10. L'arrangement du canal d'alimentation 12, 13 depuis le connecteur 19 d'un coté de la vanne, côté point mort bas vers le côté point mort haut du piston 20 présente une conception très compacte et évite d'avoir des trous d'usinage ou débouchant à l'extérieur du corps de vanne 11, améliorant ainsi l'étanchéité et la réactivité de fonctionnement.

Dans la figure 1, le fluide de contrôle 50 est mis sous pression et permet d'actionner ou d'activer la vanne 10 en déplaçant le piston 20 du point mort haut vers le point mort bas. Dans la figure 2, le fluide de contrôle 50 n'est pas représenté car il n'est pas mis sous pression et a été évacué, afin de permettre aux ressorts 30, 31 de repousser le piston 20 vers le point mort haut.

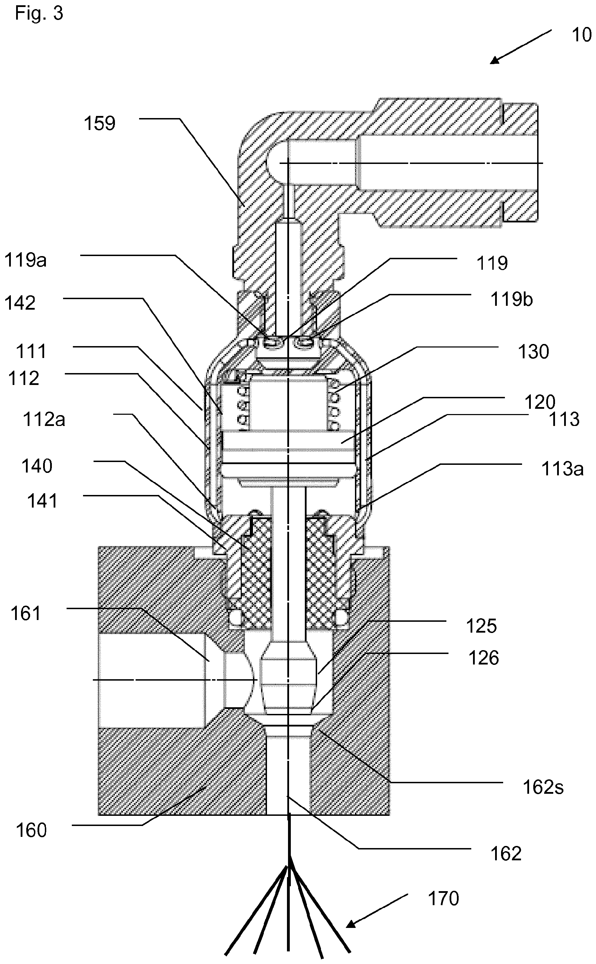

La figure 3 représente le dispositif de projection de produit de revêtement sous forme liquide selon un deuxième mode de réalisation de la présente invention, dans une position activée.

Le deuxième mode de réalisation de la présente invention reprend les principaux éléments du premier mode de réalisation. Le dispositif de projection de produit de revêtement sous forme liquide comprend la vanne 10.

La vanne 10 comprend le corps de vanne 111, le piston 120 doté d'un joint, solidaire du pointeau 125 doté de la base de pointeau 126. Le piston 120 est repoussé vers le point mort haut par le ressort 130 logé dans le logement 142 du corps de vanne 111. Le pointeau 125 étant solidaire du piston 120, il va libérer le passage 162s de produit liquide d'un corps de bloc 160 vers les moyens de projection 170 schématiquement représentés, par l'intermédiaire d'un alésage de distribution 162 d'un corps de bloc 160. Le corps de bloc 160 est alimenté en produit de revêtement sous forme liquide par un alésage d'alimentation 161, connecté à un contenant de produit de revêtement liquide du dispositif de projection, tel qu'une bonbonne de peinture.

Le corps de vanne 111 comprend les canaux d'alimentation 112, 113 comprenant la portion point mort bas reliant le connecteur 119 doté de trous 119a, 119b, à la portion centrale des canaux d'alimentation 112, 113, logée dans la paroi latérale du corps de vanne 111 et s'étendant longitudinalement et parallèlement au logement 142 jusqu'à la portion point mort haut, débouchant dans le logement 142 par l'intermédiaire de trous débouchant ou d'échappement 112a, 113a. Le logement 142 est cylindrique dans un exemple avantageux, de même que le piston 120. L'ensemble du canal d'alimentation 112, 113 et ses différentes portions est logé dans le corps de vanne 111.Le piston 120 est retenu en fin de course par le couvercle 141 et contre-couvercle 140.

Le dispositif de projection comprend en outre un corps d'alimentation 159 connecté à la vanne 10 par l'intermédiaire du connecteur 119. A des fins de clarté, le fluide de contrôle 50 n'est pas représenté.

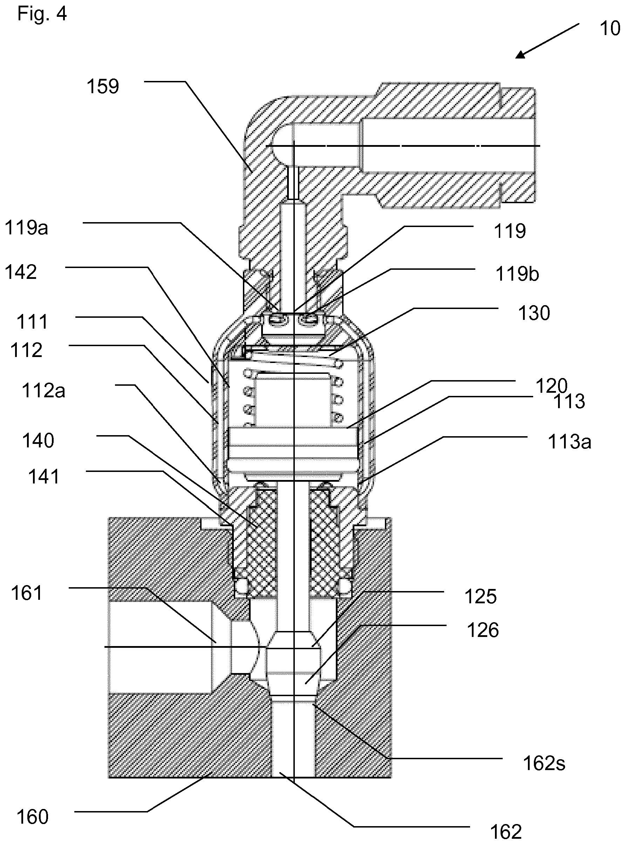

La figure 4 représente le dispositif de projection de produit de revêtement sous forme liquide selon le deuxième mode de réalisation de la présente invention, dans une position désactivée.

Le dispositif illustré en figure 4 est le même que celui illustré en figure 3. Il est représenté dans une position désactivée, c'est-à-dire que la base de pointeau 126 vient obturer le passage 162s de produit liquide du corps de bloc 160 vers les moyens de projection, le pointeau 125 s'appuyant sur le passage 162s en forme de siège, et bloquant le produit de revêtement liquide alimenté depuis l'alésage d'alimentation 161.

La figure 5 représente une coupe au niveau d'un pointeau du dispositif de projection selon le deuxième mode de réalisation.

La pluralité de canaux d'alimentation 112, 113 comprend six canaux d'alimentation 112, 113, 114, 115, 116, 117 logés dans le corps de vanne 111 et répartis angulairement. Le pointeau 125 et le piston 120 sont également représentés.

La figure 6 représente le schéma de fonctionnement selon le troisième mode de réalisation de la présente invention.

Le dispositif de projection de produit de revêtement sous forme liquide comprend dans le troisième mode de réalisation deux vannes 210a et 210b, schématiquement représentées. Chaque vanne 210a, 210b est reliée à un réservoir de produit de revêtement sous forme liquide 271a, 271b, respectivement, à l'aide de conduits schématiquement représentés. Les deux réservoirs peuvent contenir le même produit afin d'augmenter la capacité de production sans arrêt (réservoir de rechange) ou des produits différents afin de réaliser des changements de produit à la volée par exemple, en distribuant rapidement un produit après l'autre. Ce peut être le cas par exemple d'un produit de sous-couche de revêtement recouvert par un produit de surcouche ou couche finale, ou des produits utilisés l'un après l'autre sur un pochoir par exemple.

Le dispositif de projection comprend en outre une pompe doseuse 280 et les moyens de projection, tel qu'un projecteur 290 ou un pistolet à peinture. Le dispositif permet de projeter les produits de revêtements 271a, 271b ensemble ou alternativement, sur la pièce à recouvrir ou peindre 291, schématiquement représentée.

On comprendra que diverses modifications et/ou améliorations évidentes pour l'homme du métier peuvent être apportées aux différents modes de réalisation de l'invention décrits dans la présente description. En particulier, il est fait référence à une adaptation du nombre de canaux de la pluralités de canaux d'alimentation 112, 113.

## Revendications

1. Dispositif de projection d'un produit de revêtement sous forme liquide, comprenant:
- des moyens de projection du produit liquide,
- une vanne de contrôle (10) d'écoulement du produit liquide vers les moyens de projection,
la vanne (10) étant actionnée par un fluide de contrôle (50) et comprenant:
- un piston (20) agencé pour être déplacé par le fluide de contrôle (50) entre un point mort haut et un point mort bas,
- un pointeau (25) solidaire du piston (20) et agencé pour libérer ou obturer un passage de produit liquide vers les moyens de projection,
- un corps de vanne (11) comprenant un logement (42) agencé pour loger le piston (20), et comprenant un connecteur d'alimentation (19) en fluide de contrôle (50) agencé du côté du point mort bas, le corps de vanne (11) est monolithique et comprend en outre au moins un canal d'alimentation (12, 13) en fluide de contrôle (50) formé dans une paroi latérale du corps de vanne (11) et dont au moins une portion longitudinale s'étend le long d'une partie du logement (42) depuis le côté du connecteur d'alimentation (19) vers le côté du point mort haut, et ledit au moins un canal d'alimentation (12, 13) comprend en outre :
- une portion côté point mort bas en deçà du point mort bas s'étendant le long d'une direction ayant une composante radiale et reliant le connecteur d'alimentation (19) à la portion longitudinale, et
- une portion côté point mort haut s'étendant le long d'une direction ayant une composante radiale connectée à la portion longitudinale et comprenant un trou d'échappement (12a, 13a) débouchant dans le logement (42) du corps de vanne (11) au-delà du point mort haut, de sorte à permettre le rappel du piston (20), et
le dispositif étant **caractérisé en ce que** le corps de vanne (11) comprend une pluralité de canaux d'alimentation (12, 13) en fluide de contrôle (50) logés dans la paroi du corps de vanne (11).

2. Dispositif selon la revendication précédente, dans lequel ledit au moins un canal d'alimentation (12, 13) est un conduit continu directement intégré au corps de vanne (11) monolithique.

3. Dispositif selon l'une des revendications précédentes, dans lequel ledit au moins un canal d'alimentation (12, 13) présente un diamètre inférieur ou égal à 1,5 mm.

4. Dispositif selon l'une des revendications précédentes, dans lequel le corps de vanne (11) présente un diamètre extérieur inférieur ou égal à 30 mm.

5. Dispositif selon l'une des revendications précédentes, dans lequel la vanne (10) comprend en outre un ressort de rappel (30, 31) agencé pour être logée dans le logement (42) entre le côté du connecteur d'alimentation (19) et le piston (20).

6. Dispositif selon la revendication précédente, le pointeau (25) étant agencé pour :
- ouvrir le passage de produit liquide vers les moyens de projection lorsque le fluide de contrôle est distribué au point mort haut,
- fermer le passage de produit liquide vers les moyens de projection lorsque le fluide de contrôle n'est pas distribué au point mort haut.

7. Dispositif selon l'une des revendications précédentes, dans lequel chacun de la pluralité de canaux d'alimentation (12, 13) présente un axe parallèle à un axe du piston (20), ou à un axe du ressort (30, 31) ou à un axe du connecteur d'alimentation (19).

## Patentansprüche

1. Vorrichtung zum Spritzen eines Beschichtungsprodukts in flüssiger Form, die Folgendes umfasst:
- Mittel zum Spritzen des flüssigen Produkts,
- ein Ventil (10) zur Regelung des Abflusses des flüssigen Produkts hin zu den Spritzmitteln,
wobei das Ventil (10) durch ein Regelungsfluid (50) betätigt wird und Folgendes umfasst:
- einen Kolben (20), der dazu gestaltet ist, durch das Regelungsfluid (50) zwischen einem oberen Totpunkt und einen unteren Totpunkt verlagert zu werden,
- eine Düsennadel (25), die fest mit dem Kolben (20) verbunden ist und dazu gestaltet ist, einen Durchgang von flüssigem Produkt hin zu den Spritzmitteln freizugeben oder zu verschließen,
- einen Ventilkörper (11), der eine Aufnahme (42) umfasst, die dazu ausgestaltet ist, den Kolben (20) aufzunehmen, und einen Verbinder (19) zur Versorgung mit Regelungsfluid (50) umfasst, der auf der Seite des unteren Totpunkts angeordnet ist,
wobei der Ventilkörper (11) monolithisch ist und ferner mindestens einen Kanal (12, 13) zur Versorgung mit Regelungsfluid (50) umfasst, der in der seitlichen Wand des Ventilkörpers (11) gebildet ist und von dem mindestens ein Längsabschnitt sich von der Seite des Versorgungsverbinders (19) entlang eines Teils der Aufnahme (42) hin zum oberen Totpunkt erstreckt, und
der mindestens eine Versorgungskanal (12, 13) ferner Folgendes umfasst:
- einen Abschnitt auf der Seite des unteren Totpunkts diesseits des unteren Totpunkts, der sich entlang einer Richtung erstreckt, die eine radiale Komponente aufweist, und den Versorgungsverbinder (19) mit dem Längsabschnitt verbindet, und
- einen Abschnitt auf der Seite des oberen Totpunkts, der sich entlang einer Richtung erstreckt, die eine radiale Komponente aufweist, der mit dem Längsabschnitt verbunden ist und ein Ausströmloch (12a, 13a) umfasst, das in die Aufnahme (42) des Ventilkörpers (11) jenseits des oberen Totpunkts mündet, derart dass die Rückstellung des Kolbens (20) ermöglicht wird, und die Vorrichtung **dadurch gekennzeichnet ist, dass** der Ventilkörper (11) eine Vielzahl von Kanälen (12, 13) zur Versorgung mit Regelungsfluid (50) umfasst, die in der Wand des Ventilkörpers (11) aufgenommen sind.

2. Vorrichtung nach dem vorhergehenden Anspruch, wobei der mindestens eine Versorgungskanal (12, 13) eine ununterbrochene Leitung ist, die direkt in den monolithischen Ventilkörper (11) integriert ist.

3. Vorrichtung nach einem der vorhergehenden Ansprüche, wobei der mindestens eine Versorgungskanal (12, 13) einen Durchmesser von kleiner oder gleich 1,5 mm aufweist.

4. Vorrichtung nach einem der vorhergehenden Ansprüche, wobei der Ventilkörper (11) einen Außendurchmesser von kleiner oder gleich 30 mm aufweist.

5. Vorrichtung nach einem der vorhergehenden Ansprüche, wobei das Ventil (10) ferner eine Rückstellfeder (30, 31) umfasst, die dazu gestaltet ist, in der Aufnahme (42) zwischen der Seite des Versorgungsverbinders (19) und dem Kolben (20) aufgenommen zu sein.

6. Vorrichtung nach dem vorhergehenden Anspruch, wobei die Düsennadel (25) gestaltet ist zum:
- Öffnen des Durchgangs des flüssigen Produkts hin zu den Spritzmitteln, wenn das Regelungsfluid am oberen Totpunkt verteilt wird,
- Schließen des Durchgangs des flüssigen Produkts hin zu den Spritzmitteln, wenn das Regelungsfluid nicht am oberen Totpunkt verteilt wird.

7. Vorrichtung nach einem der vorhergehenden Ansprüche, wobei jeder von der Vielzahl von Versorgungskanälen (12, 13) eine Achse parallel zu einer Achse des Kolbens (20) oder zu einer Achse der Feder (30, 31) oder zu einer Achse des Versorgungsverbinders (19) aufweist.

## Claims

1. A device for spraying a coating product in liquid form, comprising:
- means for spraying the liquid product,
- a valve for controlling (10) the flow of the liquid product towards the spraying means,
the valve (10) being actuated by a control fluid (50) and comprising:
- a piston (20) arranged to be moved by the control fluid (50) between a top dead center and a bottom dead center,
- a needle (25) secured to the piston (20) and arranged to release or obturate a liquid product passage towards the spraying means,
- a valve body (11) comprising a housing (42) arranged to house the piston (20), and comprising a control fluid (50) supply connector (19) arranged on the side of the bottom dead center,
the valve body (11) is monolithic and further comprises at least one control fluid (50) supply channel (12, 13) formed in a side wall of the valve body (11) and of which at least one longitudinal portion extends along part of the housing (42) from the side of the supply connector (19) to the side of the top dead center, and
said at least one supply channel (12, 13) further comprises:
- a portion on the bottom dead center side below the bottom dead center extending along a direction having a radial component and connecting the supply connector (19) to the longitudinal portion, and
- a portion on the top dead center side extending along a direction having a radial component connected to the longitudinal portion and comprising an exhaust hole (12a, 13a) opening out into the housing (42) of the valve body (11) beyond the top dead center, so as to allow the return of the piston (20), and
the device being **characterized in that**
the valve body (11) comprises a plurality of control fluid (50) supply channels (12, 13) housed in the wall of the valve body (11).

2. The device according to the preceding claim, wherein said at least one supply channel (12, 13) is a continuous conduit directly integrated into the monolithic valve body (11).

3. The device according to any of the preceding claims, wherein said at least one supply channel (12, 13) has a diameter less than or equal to 1.5 mm.

4. The device according to any of the preceding claims, wherein the valve body (11) has an external diameter less than or equal to 30 mm.

5. The device according to any of the preceding claims, wherein the valve (10) further comprises a return spring (30, 31) arranged to be housed in the housing (42) between the side of the supply connector (19) and the piston (20).

6. The device according to the preceding claim, the needle (25) being arranged to:
- open the liquid product passage to the spraying means when the control fluid is distributed at the top dead center,
- close the liquid product passage to the spraying means when the control fluid is not distributed at the top dead center.

7. The device according to any of the preceding claims, wherein each of the plurality of supply channels (12, 13) has an axis parallel to an axis of the piston (20), or to an axis of the spring (30, 31) or to an axis of the supply connector (19) .
